# EUROPEAN PATENT APPLICATION

(11) **EP 0 837 032 A1**
(43) Date of publication of application: **22.04.1998**
(21) Application number: 97308122.7
(22) Date of filing: 14.10.1997
(51) Int. Cl.: C01B 13/11

(54) **An ozone generator**

(30) Priority: 17.10.1996 GB 9621663
(71) Applicant: Ozone Industries Limited, Farnborough, Hampshire GU14 0NR (GB)
(72) Inventor: Cole, William Lesley, Mytchett, Camberley Surrey GU16 6DX (GB)
(74) Representative: Cooke, William Douglas

(57) **Abstract**

The present invention relates to an ozone generator comprising at least one ozonising element 8, said at least one ozonising element 8 comprising a first electrode 2, a second electrode 4 and means for coupling a high-tension voltage therebetween, each ozonising element 8 being operable to produce ozone when the high-tension voltage is applied across the first and second electrodes 2, 4 in the presence of an oxygen supply, the first electrode 2 comprising a layer of conductive material provided on one side of a dielectric substrate 3, and the second electrode 4 comprising a layer of conductive material on the reverse side of the substrate 3. Preferably, the first electrode 2 comprises a layer of titanium provided on a ceramic substrate 3, and the second electrode 4 comprises a layer of conducting ink on the reverse side of the substrate 3, such as a metallic ink such as gold ink. A heat sink may be provided.

## Description

This invention relates to an ozone generator for the production of ozone.

Ozone, also referred to as "activated oxygen", is an allotropic form of oxygen, and is the fourth strongest oxidant. It has the formula O₃, and is formed by the action of ultraviolet light on oxygen. Ozone can be produced by silent electrical discharge, by connecting a high voltage, high frequency a/c supply across two electrodes and passing an oxygen - containing gas, for example, air, between the electrodes. As the air passes between the electrodes, some of the oxygen molecules are excited to produce ozone molecules. This is represented by:

3O₂ = 2O₃

The reaction is endothermic.

The production of ozone using silent electrical discharge has been known for well over 100 years, a common form of ozone generator being the Siemens generator, which is described in "Comparative Inorganic Chemistry" by B. Moody, page 207. developed in 1858.

Ozone is an effective disinfecting and deodorising agent. Ozone is capable of killing bacteria by breaking up their molecular structure. Thus, where unpleasant or harmful smells are caused by noxious airborne chemicals and by surface bacteria, the ozone kills the bacteria and breaks down the molecular structures of the chemicals, thus disinfecting and deodorising. Even at a low level of 0.1 part per million, ozone is an effective bactericide. Because ozone is unstable, the ozone decomposes to oxygen leaving no residues to further eliminate. Ozone can also be used to sterilise water by dissolving ozone in it.

Because of these properties, the process of ozonising i.e. treating with ozone, has many applications, for example, in the sterilising of work surfaces in kitchens, for disinfecting and deodorising public conveniences, and, when dissolved, for sterilising swimming pools instead of using chlorine.

Commercial devices for producing ozone, typically for disinfecting and deodorising are well known.

A known ozone generator - or ozoniser as they are commonly referred to as - comprises a generating cell, the generating cell comprising a glass tube provided with an inner aluminium coating and concentrically mounted within a stainless steel tube. Spacers are used to ensure a uniform gap between the glass tube and the stainless steel tube. The aluminium coating is coupled to a high voltage supply and the stainless steel tube is coupled to earth. The stainless steel tube forms a first electrode, the aluminium coating a second electrode, the two being separated by a dielectric - the glass, and an air gap. An oxygen containing gas is passed along the gap, and the high voltage alternating current applied across the electrodes, thus producing some ozone molecules from the oxygen molecules in the gas by silent electrical discharge. Excess energy, (ie: energy from the electrical voltage not utilised in the reactions to form ozone), is dissipated as heat, so the generating cell is surrounded by a water - cooled jacket to prevent overheating.

Unfortunately, these generating cells are prone to glass failure - a 50% failure in a six month period is not unknown.

Another known ozoniser uses a generating cell comprising a glass or ceramic tube with an inner silver mirror coating and an outer stainless steel mesh.

These generating cells are prone to overheating, which can be aggravated by the mirror coatings, and electrically break down in small isolated points. This is further aggravated by glass impurities and a non - uniform electric field due to the undulating form of the stainless steel mesh.

The mirrored coating has poor adhesion to the substrate and is likely to wear off over time.

Ceramics have been used as the dielectric, but when they are used, the dimensions of the air gap become extremely critical to provide efficient and satisfactory ozone production otherwise the silent electrical discharge will only result on one side of the tube. It is extremely difficult to manufacture ceramics to the tolerances required.

According to the present invention, there is provided an ozone generator comprising at least one ozonising element, said at least one ozonising element comprising a first electrode, a second electrode and means for coupling a high-tension voltage there between, each ozonising element being operable to produce ozone when the high-tension voltage is applied across the first and second electrodes in the presence of an oxygen supply, characterised in that the first electrode comprises a layer of conductive material provided on one side of a dielectric substrate, and the second electrode comprises a layer of conductive material on the reverse side of the substrate.

The first electrode may comprise a layer of titanium provided on a ceramic substrate, and the second electrode may be a layer of conducting ink on the reverse side of the substrate, such as a metallic ink such as gold ink. The titanium layer may be formed using a plasma spraying technique using titanium powder. The generating means may include more than one front and back electrode. This ozone generating means has the advantage of being cheap and easy to manufacture and modular in concept. Because the front, Titanium, electrode is a metallic layer, the arrangement is electrostatically less noisy than known ozone generating devices, which means that the generator of the present invention is more electromagnetically compatible than known devices. A sprayed metallic layer is less prone to damage - especially during manufacture - which lends itself to large scale production. The electrodes are also less prone to corrosion in the chemically aggressive environment of ozone production. The ozonising element comprising the front and back electrodes and dielectric substrate may be removable for cleaning, and because the front and back electrodes are formed as layers on the dielectric substrate, it withstands cleaning well.

An ozone generating cell may be provided with a heat sink. Preferably the heat sink comprises at least one aluminium block. Said heat sink may comprise an array of cooling fins. Preferably, the heat sink is bonded to the ozone generating cell by a heat conducting resin or adhesive. The second electrode may comprise an electrically conductive resin or adhesive.

The present invention will now be described with reference to the accompanying drawings, of which:

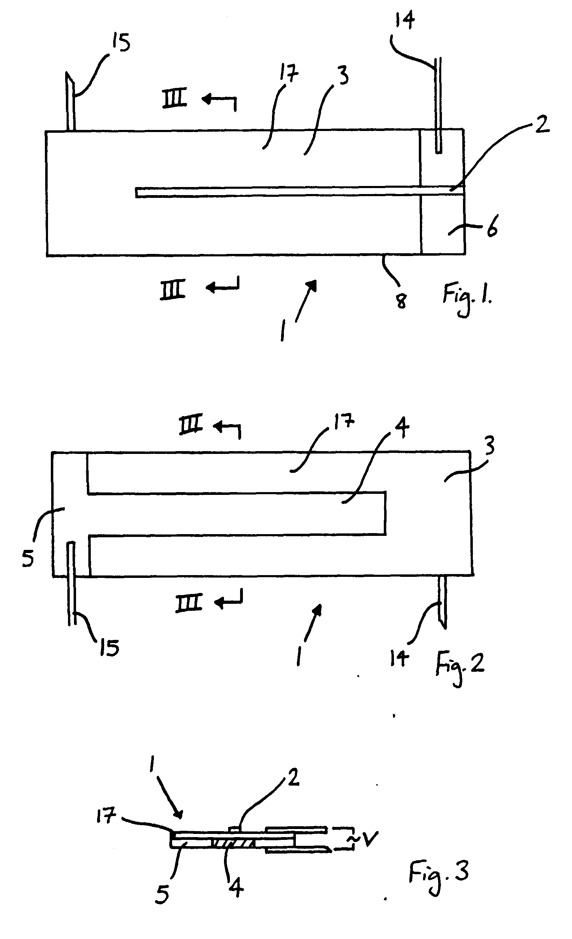

Figure 1 is a plan view of an ozone generating cell of the invention comprising a single ozone generating element;
Figure 2 is the underside view of the cell of Figure 1;
Figure 3 is a cross section along the lines III-III of Figures 1 and 2 (not to scale); and
Figures 4a, 4b and 4c are plan, side and underside views of a tile illustrating the method of manufacturing an ozone generating cell of Figures 1 to 3.
Figure 5 is a sectional view from the side of a further embodiment of an ozone generating cell of the invention with a heat sink.

A generating cell 1 comprises one or more elements 8 each element 8 comprising a front electrode 2 deposited on a substrate 3. On the reverse side of the substrate 3 there is provided a back electrode 4. The front electrode 2 comprises a "finger" of Titanium formed as a layer of sprayed Titanium powder as discussed in more detail below. The back electrode 4 is a layer of a conducting ink, for example, Heraeus C4081. A high tension voltage supply V can be coupled across the front and back electrodes 2,4 by means of contact regions 5, 6. The front contact region 6 comprises a strip of conducting ink adjacent one end of the substrate 3 contacting the front electrode 2. The back contact region 5 also comprises a strip of conducting ink provided adjacent the other end of the substrate 3 on the reverse side contacting the back electrode 4 to form - with the back electrode 4 - a T-shaped region of conducting ink as illustrated in Figure 2. The back electrode 4 and the contact regions 5, 6 are deposited using silk screen techniques.

By passing an oxygen-containing gas, for example, air, in the vicinity of the front electrode 2 and applying a high-tension voltage V across the two electrodes 2,4, ozone is generated in the vicinity of the titanium fingers. Using a high-density alumina plate as the substrate 3, and a front electrode of approximately 1mm in width and 40mm in length, and a suitable power supply, then an ozone output of approximately 50mg per hour can be achieved. A back electrode would, typically, be approximately 40mm long by 4 mm wide. The high-tension voltage V is coupled across the front and back electrodes by coupling the high tension supply V to the contact regions 5,6 using connecting wires 14,15 soldered to the contact regions 5,6. Alternatively, instead of soldered wire connections, metallic spring clips can be used to contact the contact regions 5,6. This enables the element 17 comprising the ceramic substrate 3 with the front and back electrodes thereon to be removed for cleaning. Preferably, the element 17 is cleaned by wiping it with a soft material impregnated with a solvent, for example, a cotton wool bud soaked in alcohol.

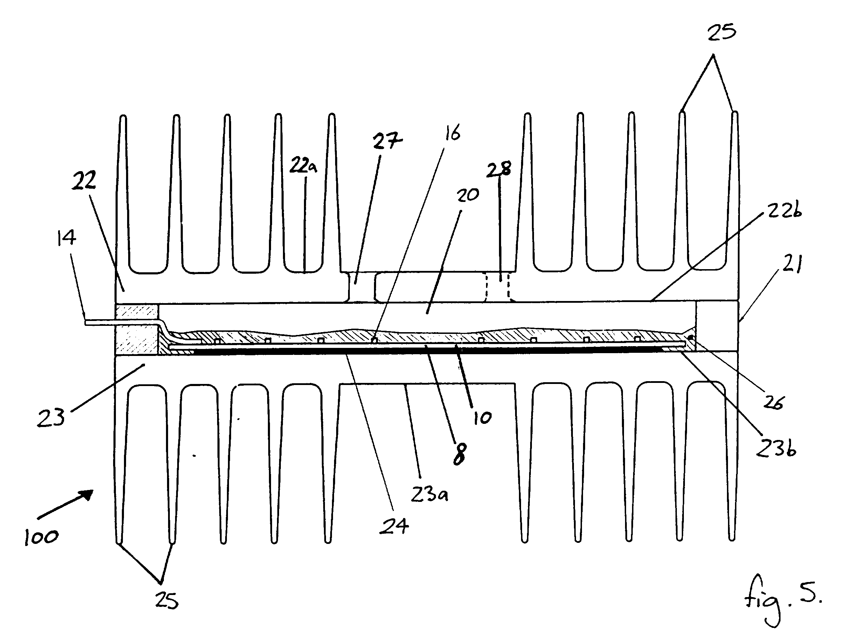

A silicon rubber resin 26, as shown in the generating cell arrangement of figure 5, is applied over the back electrode 4 and its contact 5 to prevent it oxidising.

If a generating cell 1 comprises more than one element 8, then, each front electrode 2 must be separated by a sufficient distance to ensure that ozone is formed when the high-tension voltage is applied. If they are too close, then no ozone will be formed. This separation has to be decided empirically, but, it has been found, typically, that a minimum separation is around 5mm.

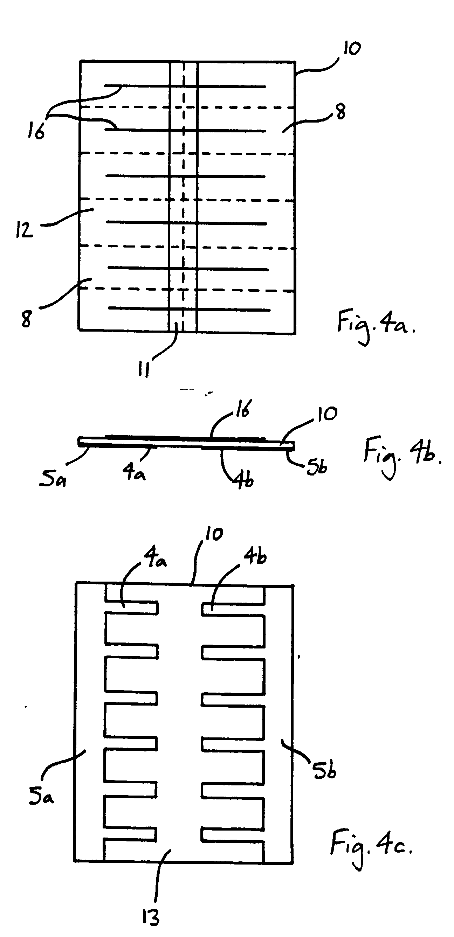

An ozone generating cell 1 is made using alumina tiles 10, typically 10cm by 9cm in size, and 0.5 mm in thickness. Using a silk screen techniques, six pairs of back electrodes 4a, 4b, and respective contact regibns 5a, 5b are formed on one face 13 - the reverse side as described above - of the alumina tile 10 as illustrated in Figure 4c. Then, again using a silk screen technique, a central region of conducting ink 11 is formed on the upper side 12 which will form the contact region 6 for the front electrode 2.

Finally, ten of the tiles 10 are placed on a backing plate (not shown) in a 5 by 2 array. A suitable mask is applied to the upper side 12 of the tiles 10 to obtain a pattern of six 1mm by 80mm titanium fingers 16 on each tile.

The titanium fingers 16 are formed using a plasma spraying technique, using Titanium powder comprising particles of irregular shape and size, typically between 5 and 25 microns in diameter. Plasma spraying is a known technique for depositing materials on a substrate. A plasma torch is used in which an electric arc is contained within a constricted nozzle. An inert gas is passed through the nozzle and the arc, which then becomes dissociated and partially ionised, thereby increasing the gas temperature. A secondary gas can be added for further control. A powdered material is then injected into the gas stream whereby the powder particles are melted and accelerated towards the substrate such that they strike the surface of the substrate, flatten and cool. As they cool, the particles contract and bond to the roughened surface of the substrate. To produce the titanium fingers 16 described above, typically, a 6mm Argon nozzle is used with Argon as the primary gas and Hydrogen as the secondary gas. An arc current of 500 Amps is used and an injector diameter of 1.8mm. To prevent oxidation of the Titanium powder, a ring shroud of Argon is used with a pressure of approximately 60 psi. The deposition is carried out at a working distance of 110mm.

A robot arm holds the plasma torch and sweeps over the tiles 10 in a series of passes until the required thickness is obtained, which is typically 50 microns.

Once the titanium fingers 16 have been formed and the silicon rubber coating being placed on the back electrodes 4 and contact regions 5, then the generating cells 1 themselves are formed.

Each alumina tile 10 is scored with 5 substantially equidistantly spaced horizontal lines and one substantially centrally located vertical line as illustrated in Figure 4a by the dotted lines.

The tile 10 can then be broken up into either 12 single elements 8, or generating cells comprising multiple elements up to a maximum of 12 elements per tile 10. These generating cells can be used in ozone generators to generate ozone.

In a further embodiment of the present invention, shown in figure 5, a heat sink 22,23 is provided for an ozone generating cell 100. This embodiment allows the dissipation of heat from the cell 100, preventing overheating. The ozone generating cell 100, which in this embodiment comprises multiple elements 8, but may equally comprise a single element 8 in alternative embodiments, is made as described above. The ozone generating cell 100 comprises a hollow chamber 20, formed within a circumferential silicone rubber gasket 21 having four side walls. In an alternative embodiment, the gasket 21 is made of any suitable non-conducting material. The gasket 21 is sandwiched between upper and lower aluminium blocks 22, 23, internal surfaces 22b, 23b of which enclose the hollow chamber 20. The upper and lower aluminium blocks 22, 23 are solid, and each comprise an array of parallel cooling fins 25 extending from their external surfaces 22a, 23a at approximately 90 degrees to the plane of each aluminium block 22, 23. The aluminium blocks 22, 23 constitute upper and lower heat sinks, functioning to allow dissipation of heat from the ozone generating cell 100 to the outside.

The ozone generating element 8 is arranged within the chamber 20 such that the lower side 13 of the alumina tile 10 of the ozone generating cell 100 is affixed to the internal surface 23b of the lower aluminium block 23 by means of an epoxy adhesive layer 24 therebetween. A silicon sealant 26 around the circumference of the alumina tile 10 is also provided to prevent oxidation of the contacts of the electrodes. The remainder of the interior of the hollow chamber 20 is filled with air or an oxygen-containing gas mixture, or pure oxygen. The upper side 12 of the alumina tile 10 which carries the front electrodes 16, is therefore in contact with the oxygen, allowing the formation of ozone. An exit is provided in the silicon gasket 21, through which the high tension supply wire 14 connecting to the front electrodes 16 passes.

The epoxy adhesive 24 is electrically conductive, and thus, together with the lower aluminium block 23 with which it is in contact, provides an electrical earthing means for the back electrodes 4a, 4b. It is to be noted that in an alternative embodiment, the epoxy adhesive layer 24 replaces the back electrodes 4a, 4b altogether, although in the present embodiment the back electrodes 4a, 4b are present, and comprise metallic conducting ink, such as gold ink, as previously described.

A gas inlet 27 and a gas outlet 28 are also provided, each comprising an aperture in the upper aluminium layer 22, leading through into the chamber 20. In an alternative embodiment, one or both of these apertures are provided through the lower aluminium layer, and in a further embodiment, one or both of these apertures are provided through the silicone gasket 21. The gas inlet allows air into the chamber, providing the oxygen supply for the production of ozone, and the gas outlet allows the produced ozone out of the chamber.

When the ozone generating cell 100 is in use, excess energy from the voltage, (ie: energy that is not used in the reaction to produce ozone), is dissipated as heat, which is conducted to the aluminium layers 22, 23. The epoxy adhesive 24 is thermally conductive, and being in direct contact with the back electrodes of the ozone generating cell with no air gap, is extremely efficient at conducting heat from this area directly to the lower aluminium layer 23. Heat from the gas in the chamber is transferred into the upper aluminium layer 22. The cooling fins 25 increase the surface area of the aluminium layers 22, 23, and the aluminium layers 22, 23 thus act as a heat sink, dispersing heat to the outside by convection. In this way, overheating of the cell is prevented and the durability and working life of the cell increased dramatically.

It will be understood to a person skilled in the art, that various modifications are possible within the scope of the present invention. For example, Chromium, Niobium or Zirconium, for example, can be used instead of Titanium, and other materials can be used for the back electrodes and for the substrate. Other suitable deposition techniques could also be used.

## Claims

1. An ozone generator comprising at least one ozonising element, said at least one ozonising element comprising a first electrode, a second electrode and means for coupling a high-tension voltage there between, each ozonising element being operable to produce ozone when the high-tension voltage is applied across the first and second electrodes in the presence of an oxygen supply, characterised in that the first electrode comprises a layer of metallic material provided on one side of a ceramic dielectric substrate, and the second electrode comprises a layer of electrically conductive material on the reverse side of the substrate.

2. An ozone generator according to claim 1, characterised in that the first electrode comprises a layer of titanium.

3. An ozone generator according to claim 2, characterised in that the metallic material is applied using a plasma spraying technique to deposit powdered metallic material particles on the dielectric substrate.

4. An ozone generator according to claim 1, characterised in that the high-tension voltage supply is coupled across the first and second electrodes by means of contact regions arranged on the dielectric substrate.

5. An ozone generator according to claim 4, characterised in that the second electrode and/or contact region is a layer of conducting ink.

6. An ozone generator according to claims 5, characterised in that the conducting ink is applied using a silk screen technique.

7. An ozone generator according to claim 4 characterised in that a silicone rubber resin is applied over either the first or second electrode and the corresponding contact to prevent ozonisation.

8. An ozone generator according to claim 1, characterised in that there are at least two ozonising elements and that the first electrodes thereof are separated from each other by at least 5mm.

9. An ozone generator according to any preceding claim except claim 5, characterised in that the second electrode is a layer of electrically conductive resin, such as epoxy adhesive.

10. An ozone generator according to claim 1, characterised in that said ozone generator comprises at least one heat sink through which heat is conducted away from at least one ozonising element.
